# FASCICULE DE BREVET EUROPEEN

(11) **EP 2 795 079 B1**
(45) Date de publication et mention de la délivrance du brevet: **13.12.2017**
(21) Numéro de dépôt: 12812298.3
(22) Date de dépôt: 17.12.2012
(51) Int. Cl.: F02M 26/26

(54) **DISPOSITIF DE DOSAGE A DEUX VOIES SECURISÉ POUR MOTEUR D'AUTOMOBILE**
ZWEIWEGE-SICHERHEITSVENTIL FÜR EINE BRENNKRAFTMASCHINE
TWO WAY SECURITY VALVE DEVICE FOR AN ENGINE

(30) Priorité: 21.12.2011 FR 1162187
(43) Date de publication de la demande: 29.10.2014
(73) Titulaire: Valeo Systemes de Controle Moteur, 95800 Cergy Saint Christophe (FR)
(72) Inventeur: LALLEMANT, Mathieu, F-78600 Maisons-Laffitte (FR); GIRARDON, Franck, F-78700 Conflans Sainte Honorine (FR); LEBRASSEUR, Patrick, F-60240 Montigny En Vexin (FR)
(74) Mandataire: Garcia, Christine
(86) Numéro de dépôt international: PCT/FR2012/052951
(87) Numéro de publication internationale: WO 2013/093312

(56) Documents cités:
- EP-A1- 2 208 875
- EP-A2- 1 923 551
- FR-A1- 2 926 114

## Description

Le domaine de la présente invention est celui de l'automobile et, plus particulièrement, celui des équipements pour l'alimentation du moteur.

Un moteur thermique de véhicule automobile comporte une chambre de combustion, généralement formée par une pluralité de cylindres, dans laquelle un mélange de carburant et d'air est brûlé pour générer le travail du moteur.

Il est connu des architectures dans lesquelles le débit de fluide d'admission, comprenant l'air nécessaire au fonctionnement du moteur, est divisé entre deux canalisations. L'une des canalisations porte un dispositif de refroidissement de ce fluide, alors que l'autre n'en comporte pas. Ces deux canalisations se rejoignent ensuite à l'entrée du moteur. Un dispositif de dosage peut ainsi faire varier la température du fluide d'admission avant son introduction dans les cylindres selon que l'on envoie plus de fluide par la voie qui traverse le refroidisseur, dite voie refroidie, ou par la voie qui le contourne, dite voie by-pass ou voie non refroidie. Le dispositif de dosage permet de la sorte de gérer à la fois la quantité du fluide admis dans les cylindres et sa température. Un exemple d'un tel dispositif est représenté en EP-2208875. Dans l'art antérieur ce dispositif de dosage a tout d'abord été réalisé sous la forme de deux doseurs simples, qui reçoivent des consignes du calculateur de régulation du moteur et qui ouvrent plus ou moins leur volet à l'aide d'un actionneur asservi en position. Ils ont également pour fonction d'assurer, sur une commande spécifique, l'arrêt du moteur, par envoi de leurs volets en position plein fermée, ce qui étouffe le moteur. Dans leur position de repos, c'est-à-dire celle prise par les volets en cas de panne de l'asservissement ou d'absence de réception d'une consigne, ceux-ci se placent automatiquement, sous l'effet d'un ressort de rappel, en position ouverte. Ces dispositifs ont pour inconvénients de mettre en oeuvre deux composants, de nécessiter deux systèmes d'asservissements avec les connectiques associées, ce qui augmente sensiblement leur coût, et de complexifier le système de commande du dosage pour garantir la simultanéité des deux doseurs.

Une première amélioration a été apportée avec la création de doseurs doubles qui regroupent dans un même composant les deux volets et la commande de leur positionnement. Un tel dispositif est décrit dans la demande de brevet WO 2007125205 de la demanderesse, qui montre un doseur double dont le mécanisme est actionné par un moteur commun. Dans cette demande un des volets effectue, en fonctionnement normal, un dosage du fluide d'admission, le second volet restant fermé ; dans un mode secondaire le premier volet est fermé alors que le second volet reste plein ouvert.

Ces dispositifs offrant plusieurs possibilités pour le dosage du débit et la température du fluide d'admission, il importe d'intégrer cet équipement dans le système global de régulation de l'admission du moteur, en choisissant une configuration qui, tout en répondant aux exigences de rendement recherché, assure une sécurité du système d'admission en cas de panne du moteur d'actionnement. La présente invention propose ainsi diverses réalisations technologiques répondant à cette problématique.

A cet effet, l'invention a pour objet un dispositif d'alimentation en fluide d'admission pour moteur à combustion interne ledit dispositif comprenant :
- un doseur, muni d'un corps de doseur dans lequel sont agencées une première et une seconde voies de circulation dudit fluide d'admission, dans lesquelles sont positionnés des premier et second volets d'obturation mobiles pour doser le débit traversant lesdites voies de circulation, ledit doseur comportant en outre un moteur d'actionnement desdits volets et une cinématique apte à actionner le premier volet et/ou le second volet en réponse à une rotation dudit moteur,
- un refroidisseur relié à l'une des voies de circulation du doseur, dite voie refroidie.

Ledit dispositif est en outre configuré pour relier l'autre voie de circulation du doseur, dite voie chaude, au moteur thermique sans passer par le refroidisseur.

Selon l'invention, la cinématique est conformée pour assurer, en cas de perte de l'actionnement des volets par le moteur d'actionnement, une mise en situation de repos desdits volets, le volet de la voie froide étant alors en position plein ouvert et le volet de la voie chaude étant alors en position plein fermée. Une telle position des volets garantit une mise en sécurité du moteur du véhicule par le doseur double en cas de panne du moteur d'actionnement 9, en particulier si la défaillance intervient lors d'un cas d'utilisation sévère du moteur du véhicule.

Selon différents mode de réalisation dudit dispositif, qui pourront être pris ensemble ou séparément :
- la cinématique est conformée pour assurer, à partir de ladite position de repos et en réponse à une rotation dans un premier sens dudit moteur d'entraînement, une fermeture de la voie froide simultanément à une ouverture de la voie chaude, réalisant ainsi un dosage dit proportionnel,
- la cinématique est conformée pour assurer, en réponse à une poursuite de la rotation dans le premier sens dudit moteur d'entraînement, la fermeture de la voie chaude tout en maintenant la voie froide fermée, réalisant ainsi un dosage du fluide d'admission à la température de la voie chaude,

- la cinématique est conformée pour assurer, à partir de ladite position de repos et en réponse à une rotation dans un second sens, opposé au premier sens, dudit moteur d'entraînement, une fermeture de la voie froide tout en maintenant la voie chaude fermée, réalisant ainsi un dosage du fluide d'admission à la température de la voie froide,
- la cinématique est conformée pour assurer un débit total constant lors dudit dosage proportionnel,
- la cinématique est conformée de façon à amener au moins un des deux volets en position fermée selon deux positions, l'une correspondant à un retournement dudit volet par rapport à l'autre,
- le moteur d'actionnement entraîne par l'intermédiaire d'un pignon d'entraînement deux roues dentées engrenant l'une sur l'autre, le pignon d'entraînement du moteur d'actionnement engrenant sur l'une d'entre elles, au moins une première roue dentée portant un doigt d'entraînement conformé pour entraîner en rotation une première platine liée rigidement à l'axe d'un desdits volets, par l'intermédiaire d'un ressort de rappel,
- ladite première platine comporte une plage morte dans sa coopération avec le doigt d'entraînement correspondant, ladite plage morte correspondant à l'actionnement par le moteur d'actionnement du volet entraîné par la seconde roue dentée, le volet associé à la première roue dentée restant immobile,
- le moteur d'actionnement entraîne deux roues dentées formant planétaire et couronne pour un train épicycloïdal, la rotation des composants dudit train épicycloïdal étant assurée par un élément actionné par le moteur d'actionnement et ledit élément agissant à l'encontre d'un ressort de rappel unique porté par ledit doseur.

L'invention concerne aussi un module d'admission d'air pour moteur à combustion interne comportant un dispositif selon l'une des revendications ci-dessus.

L'invention sera mieux comprise, et d'autres buts, détails, caractéristiques et avantages de celle-ci apparaîtront plus clairement au cours de la description explicative détaillée qui va suivre, de plusieurs modes de réalisation de l'invention donnés à titre d'exemple purement illustratifs et non limitatifs, en référence aux dessins schématiques annexés.

Sur ces dessins :
- la figure 1 est une vue schématique d'une architecture haute pression d'alimentation d'un moteur turbocompressé,
- la figure 2 est une vue schématique d'une architecture basse pression d'alimentation d'un moteur turbocompressé,
- la figure 3 est une vue de face d'un doseur double, selon l'invention, pour le circuit d'alimentation d'un moteur turbocompressé,
- la figure 4 est une vue schématique du fonctionnement de l'invention dans un premier mode de réalisation,
- la figure 5 donne l'évolution de la section efficace du doseur double et de la température du fluide d'admission dans le mode de réalisation de la figure 4,
- la figure 6 est une vue schématique du fonctionnement de l'invention dans un second mode de réalisation,
- la figure 7 donne l'évolution de la section efficace du doseur double et de la température du fluide d'admission dans le mode de réalisation de la figure 6,
- la figure 8 est une vue schématique du fonctionnement de l'invention dans un troisième mode de réalisation,
- la figure 9 donne l'évolution de la section efficace du doseur double et de la température du fluide d'admission dans le mode de réalisation de la figure 8,
- la figure 10 est une vue éclatée d'une réalisation d'un doseur double selon le premier mode de réalisation,
- la figure 11 est une vue schématique, selon une représentation linéaire, du positionnement des éléments constitutifs d'un doseur double selon le premier mode de réalisation, dans la position de repos de ses volets, et susceptible de fonctionner selon le schéma de la figure 4,
- la figure 12 est une vue schématique, selon une représentation linéaire, du positionnement des éléments constitutifs d'un doseur double selon le second mode de réalisation, dans la position de repos de ses volets, et susceptible de fonctionner selon le schéma de la figure 6,
- la figure 13 est une vue en perspective d'un volet du doseur double, selon le troisième mode de réalisation, et de son dispositif de commande,
- les figures 14, 15 et 16 sont des vues en perspective de trois éléments du dispositif de commande de la figure 13, respectivement une platine supérieure, une platine inférieure et une roue dentée d'entraînement,
- la figure 17 est une vue schématique, selon une représentation linéaire, du positionnement des éléments constitutifs d'un doseur double selon le troisième mode de réalisation, dans la position de repos de ses volets, et susceptible de fonctionner selon le schéma de la figure 8,
- la figure 18 est une vue schématique en perspective des éléments constitutifs d'un doseur double réalisé selon une variante du troisième mode de réalisation, et
- la figure 19 est une vue schématique, selon une représentation linéaire, du positionnement des éléments constitutifs d'un doseur double selon la variante du troisième mode de réalisation, dans la position de repos de ses volets, et susceptibles également de fonctionner selon le schéma de la figure 8.

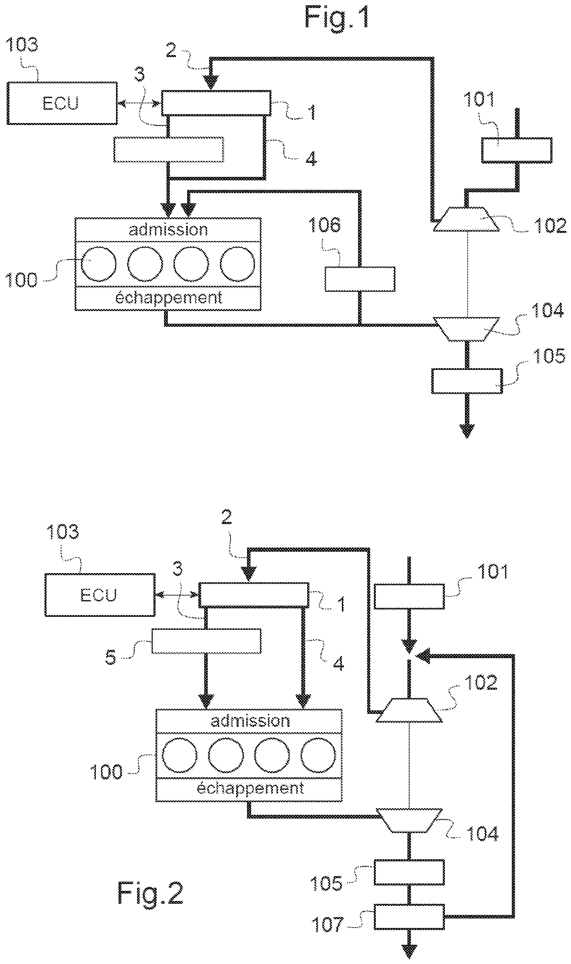

En se référant à la figure 1, on voit le circuit d'alimentation en air des cylindres 100 d'un moteur à combustion interne turbocompressé pour un véhicule automobile. L'air, prélevé à l'extérieur, passe dans un filtre à air 101 puis est comprimé par le compresseur 102 du turbocompresseur qui l'envoie dans un doseur double, objet de l'invention. Le corps 1 du doseur double possède une voie d'entrée 2 par laquelle passe l'air en provenance du compresseur et deux voies de sortie 3 et 4. Il reçoit des ordres pour le dosage de l'air entre ces deux voies, en provenance d'un calculateur 103, dit ECU pour Electronic control unit ou unité de contrôle électronique. Ces ordres sont exécutés sous la forme d'un déplacement des volets qui ferment plus ou moins les voies 3 et 4 sous l'action d'un moteur électrique d'actionnement (non représenté) et d'une cinématique adaptée, qui sont, tous deux, intégrés dans le corps du doseur double. Sur l'une des voies, dite voie refroidie 3, est monté un échangeur thermique ou refroidisseur 5, alors que l'autre voie, dite voie by-pass ou voie non refroidie ou encore voie chaude 4, est reliée directement aux pipes d'admission du moteur. En faisant varier la répartition de l'air entre les deux voies, qui se rejoignent en amont des pipes d'admission, il est ainsi possible de réguler la température à l'admission du moteur.

En sortie des cylindres du moteur les gaz brûlés sont dirigés vers le circuit d'échappement et passent dans la turbine 104 du turbocompresseur qui prélève une partie de leur énergie résiduelle pour actionner le compresseur correspondant 102. Ces gaz d'échappement traversent ensuite classiquement un filtre à particules et/ou un catalyseur 105 avant d'être éjectés du véhicule.

Dans le cas d'une architecture haute pression, telle qu'elle est représentée sur la figure 1, une partie des gaz d'échappement est recyclée, via une vanne haute pression 106 située en amont de la turbine 104, dans le circuit d'admission en aval de la jonction des deux voies de sortie 3 et 4.

Dans le cas d'un architecture basse pression, telle qu'elle est représentée sur la figure 2, on retrouve les mêmes éléments que dans une architecture haute pression, à ceci près que la partie recyclée des gaz d'échappement est prélevée en aval de la turbine 104 et réinjectée, via une vanne basse pression 107, en amont du compresseur 102 du turbocompresseur. Le fluide qui circule dans le circuit d'admission n'est alors pas uniquement de l'air mais un mélange d'air et de gaz d'échappement. Le fonctionnement du double doseur reste cependant le même dans les deux architectures.

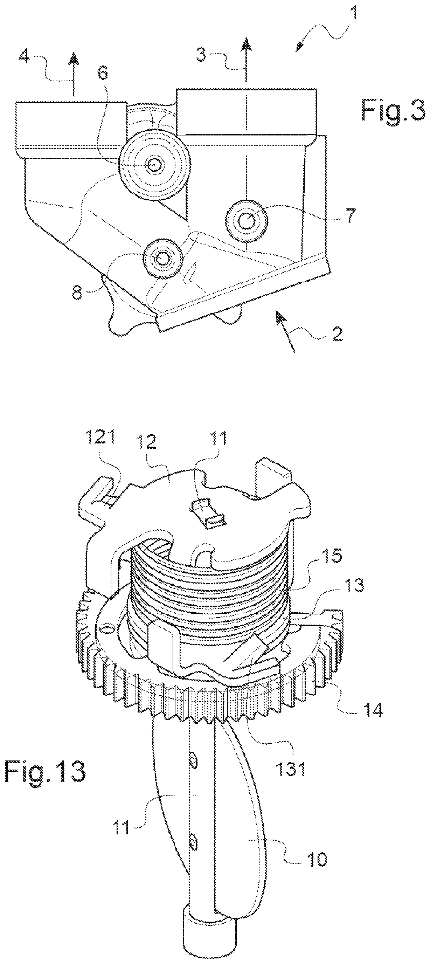

En se référant maintenant à la figure 3 on voit le corps 1 d'un doseur double, avec la voie d'entrée 2 et les deux voies de sortie 3 et 4. La première voie de sortie 3 a vocation à être raccordée à un refroidisseur 5 alors que la seconde voie 4 a vocation à court-circuiter ce refroidisseur pour rejoindre directement les pipes d'admission. Chacune des deux voies 3 et 4 est dosée par un volet mobile autour d'un axe qui est monté sur un support d'axe 7 pour la première voie et 8 pour la seconde. Le dosage sur chaque voie s'effectue par la rotation du volet, qui obstrue plus ou moins le débit d'air ou de gaz qui traverse la voie correspondante. Le corps 1 comporte également un support 6 pour le moteur électrique d'actionnement des deux volets, auquel ceux-ci sont reliés par une cinématique appropriée. Le moteur électrique d'actionnement 9 reçoit des consignes de l'ECU 103 pour placer les volets dans la position désirée.

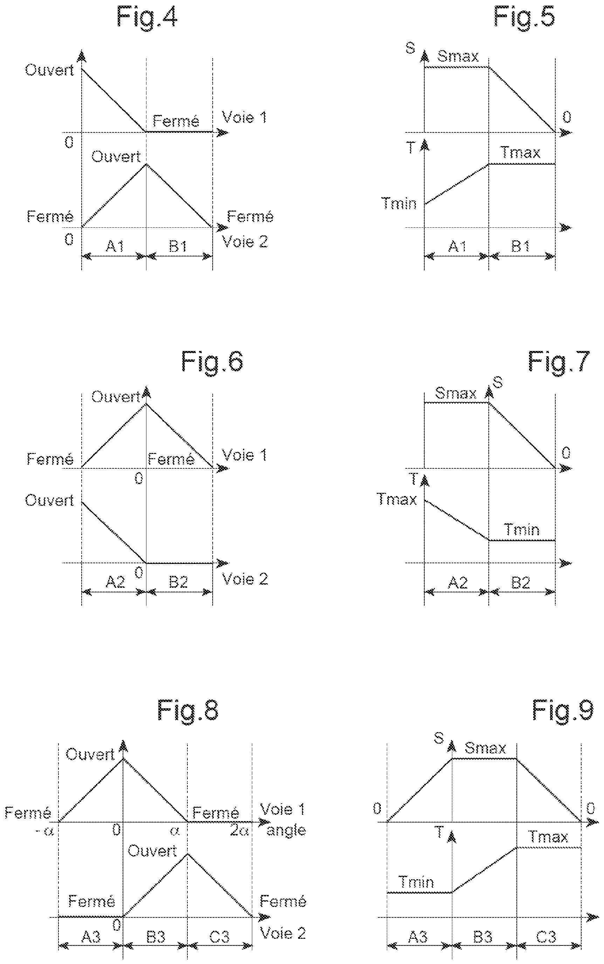

En se référant maintenant aux figures 4 et 5, on voit l'évolution relative du positionnement des deux volets, sous l'action d'une commande du moteur d'actionnement du doseur double, et de la cinématique d'entraînement des deux volets 10 et 20 dans un premier mode de réalisation. L'axe des abscisses correspond à la course du moteur d'actionnement, de sa position neutre jusqu'à son plein débattement, et la position de l'axe des ordonnées correspond à la position de repos des volets. Par rapport à cette position de repos, le moteur d'actionnement est, ici, susceptible d'entraîner des roues dentées de la cinématique dans une rotation d'ampleur 2α, en balayant la totalité des positions souhaitées pour les volets par une rotation dans un seul sens, et de revenir à la position de repos par une rotation en sens inverse. Dans cette position de repos, le volet 10 de la première voie 3 est ouvert, alors que le volet de la seconde voie 4 est fermé.

Une rotation des roues dentées d'un angle α, représenté par la branche A1 sur les figures, entraîne, à la fois, une fermeture du volet 10 de la première voie et une ouverture du volet 20 de la seconde voie. La poursuite de la rotation, d'un second angle α, représentée par la branche B1, entraîne une fermeture du volet 20 de la seconde voie, celui 10 de la première voie restant fermé. La figure 5 décrit, d'une part, l'impact de ces mouvements sur la surface efficace du doseur pour le passage du fluide d'admission dans les deux voies, et donc sur le débit dosé et, d'autre part, l'influence qu'ils ont sur la température du fluide à l'entrée dans les cylindres, en aval de la confluence des deux voies. Elle correspond à une configuration où la première voie est une voie refroidie 3 et où la seconde voie est une voie non-refroidie 4..

La branche A1 correspond à une régulation de la température du fluide, sans dosage de son volume. Les cinématiques d'ouverture et de fermeture des deux volets sont représentées ici, sans que cela soit impératif, comme se compensant mutuellement, ce qui permet d'obtenir un débit constant en sortie, pour toutes les positions de la branche A1. La branche B1 correspond à un dosage du débit sur la seule seconde voie et donc à un dosage du débit sur un fluide à une température non-refroidie, ce qui permet de faire varier la quantité d'air admise dans le moteur de façon fine.

De même, sur les figures 6 et 7 on voit l'évolution relative du positionnement des deux volets, sous l'action d'une commande du moteur d'actionnement du doseur double et de la cinématique d'entraînement des deux volets 10 et 20 d'un second mode de réalisation. L'axe des abscisses correspond, comme précédemment, à la course du moteur d'actionnement, celle-ci évoluant, ici, dans un sens ou dans l'autre, à partir de sa position neutre. La position de l'axe des ordonnées correspond, comme précédemment, à la position de repos, c'est-à-dire à celle que prennent les volets 10 et 20 dans le cas d'une perte de leur entraînement par le moteur d'actionnement. Par rapport à cette position de repos, le moteur d'actionnement est susceptible d'entraîner les roues dentées dans une rotation négative d'ampleur -α, ou dans une rotation positive d'ampleur α. Là encore, dans la position de repos le volet 10 de la première voie 3 est ouvert, alors que le volet de la seconde voie 4 est fermé.

Une rotation des roues dentées d'un angle -α à partir de la position de repos, représenté par la branche A2 sur les figures, entraîne, à la fois, une fermeture du volet 10 de la première voie et une ouverture du volet 20 de la seconde voie. La rotation d'un angle +α, représentée par la branche B2, entraîne une fermeture du volet 10 de la première voie, celui 20 de la seconde voie restant fermé.

Quant à la figure 7, elle décrit, comme précédemment, d'une part l'impact de ces mouvements sur la surface efficace du doseur pour le passage du fluide d'admission dans les deux voies, et, d'autre part, l'influence qu'ils ont sur la température du fluide à l'entrée dans les cylindres, en aval de la confluence des deux voies. La branche A2 correspond à une régulation de la température du fluide, sans dosage de son volume, les cinématiques d'ouverture et de fermeture des deux volets étant représentées ici comme se compensant mutuellement. La branche B2 correspond à un dosage du débit sur la seule première voie et donc à un dosage du débit sur un fluide à la température refroidie.

En se référant maintenant aux figures 8 et 9 on voit l'évolution relative du positionnement des deux volets, dans le troisième mode de réalisation.

Dans ce mode le moteur d'actionnement est susceptible d'entraîner les roues dentées dans une rotation d'ampleur -α dans un sens et une rotation d'ampleur 2 α dans l'autre sens, par rapport à la position de repos des volets. Comme dans les deux cas précédents, dans cette position de repos, le volet 10 de la première voie 3 est ouvert, alors que le volet de la seconde voie 4 est fermé.

Une rotation des roues dentées de l'angle -α, représenté par la branche A3 sur les figures, entraîne une fermeture du volet de la première voie alors que celui de la seconde voie reste fermé. A contrario, une rotation positive des roues dentées d'un angle +α, représentée par la branche B3, entraîne, à la fois, une fermeture du volet de la première voie et une ouverture du volet de la seconde voie. Enfin la poursuite de la rotation d'un second angle α, représentée par la branche C3, entraîne une fermeture du volet de la seconde voie, celui de la première voie restant fermé. On peut remarquer que les branches B3 et C3 sont identiques à celles A1 et B1 du premier mode de réalisation.

Comme précédemment, la figure 9 décrit, d'une part, l'impact de ces mouvements sur la surface efficace du doseur pour le passage du fluide d'admission dans les deux voies, et donc sur le débit dosé et, d'autre part, l'influence qu'ils ont sur la température du fluide à l'entrée dans les cylindres, en aval de la confluence des deux voies. On voit que la branche A3 correspond à un dosage du fluide qui traverse la seule première voie 3. En choisissant pour cette voie la voie refroidie, la température obtenue reste constante et égale à celle obtenue en sortie du refroidisseur puisque tout le fluide passe par cette voie refroidie. La branche B3 correspond à une régulation de la température du fluide, sans dosage de son volume. Enfin la branche C3 correspond à un dosage du débit sur la seule seconde voie et donc à un dosage du débit sur un fluide à la température non refroidie.

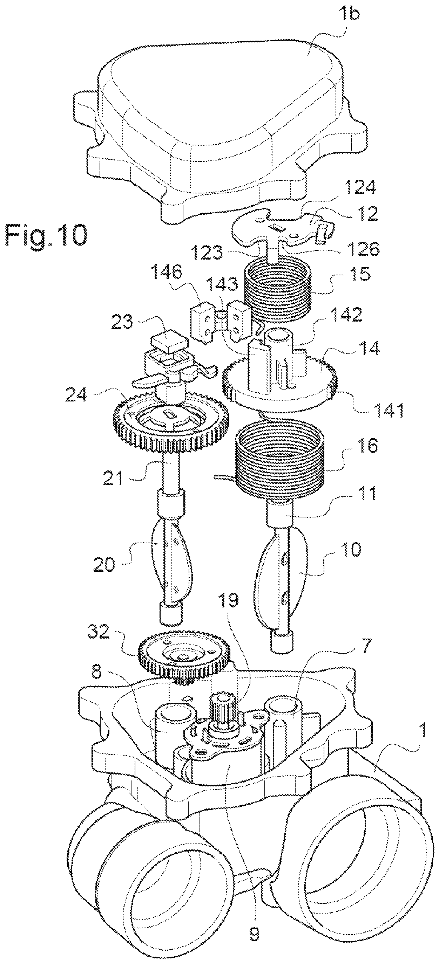

La figure 10 montre l'éclaté d'un doseur double dans un premier mode de réalisation, avec les éléments qui le composent, enfermés dans le corps 1 par son couvercle 1b.

Le moteur électrique 9 actionne, par l'intermédiaire de son axe pivot 19 une roue dentée intermédiaire 32 qui coopère avec une seconde roue dentée 24 appartenant à la seconde voie 4, elle même coopérant avec une première roue dentée 14 appartenant à la première voie 3. Ces première et seconde roues dentées sont, dans la cinématique du doseur double, les organes qui actionnent, directement ou indirectement, les premier et second volets des deux voies.

Le dispositif de commande de la première voie 3 comporte un premier volet 10, mobile en rotation autour de son axe 11, dont l'extrémité inférieure a vocation à tourner dans le support d'axe 7 du corps du doseur. L'extrémité supérieure, quant à elle, est porteuse d'une première platine supérieure 12 coaxiale, à laquelle elle est fixée rigidement de sorte qu'une rotation de cette platine supérieure déclenche une rotation de même ampleur du volet 10. L'axe 11 supporte par ailleurs, par un palier 142, la première roue dentée 14, qui est libre en rotation autour de cet axe, et qui agit sur la première platine 12 pour faire tourner le premier volet 10, selon un principe qui sera explicité ci-dessous.

La roue dentée 14 a la forme d'un disque présentant des dents sur la majeure partie de la circonférence de sa face externe 141, de façon à pouvoir être entraînée en rotation par la circonférence correspondante de la seconde roue dentée 24. En son centre elle comporte un tube cylindrique 142, s'étendant axialement, qui forme un palier pour l'axe 11 du premier volet 10 de dosage du débit de première voie. Enfin à sa périphérie, la roue dentée comporte un doigt d'entraînement 143 qui s'étend axialement et qui coopère avec une première butée 123, disposée sur la périphérie de la première platine 12. Pour entrainer le premier volet 10 ainsi que pour contribuer à son retour et positionner le volet dans une position de repos où il est plein ouvert, un premier ressort 15 est positionné entre la première roue dentée 14 et la première platine 12. Les extrémités de celui-ci sont insérées dans des encoches pratiquées à la périphérie des deux pièces de façon à assurer un rappel en rotation de la première platine 12 en direction de ladite position de repos. Une butée fixe de première voie 146 est par ailleurs implantée sur le corps 1 du doseur double pour limiter la rotation de la première platine 12, par coopération de cette première butée fixe avec une excroissance 124 positionnée sur la périphérie de la platine. La première platine 12 présente en outre une plage morte 126 permettant la compression du premier ressort 15 grâce la rotation du doigt d'entraînement 143, la première platine étant immobile par suite du contact entre l'excroissance 124 de la première platine 12 et la butée fixe 146 de la première voie.

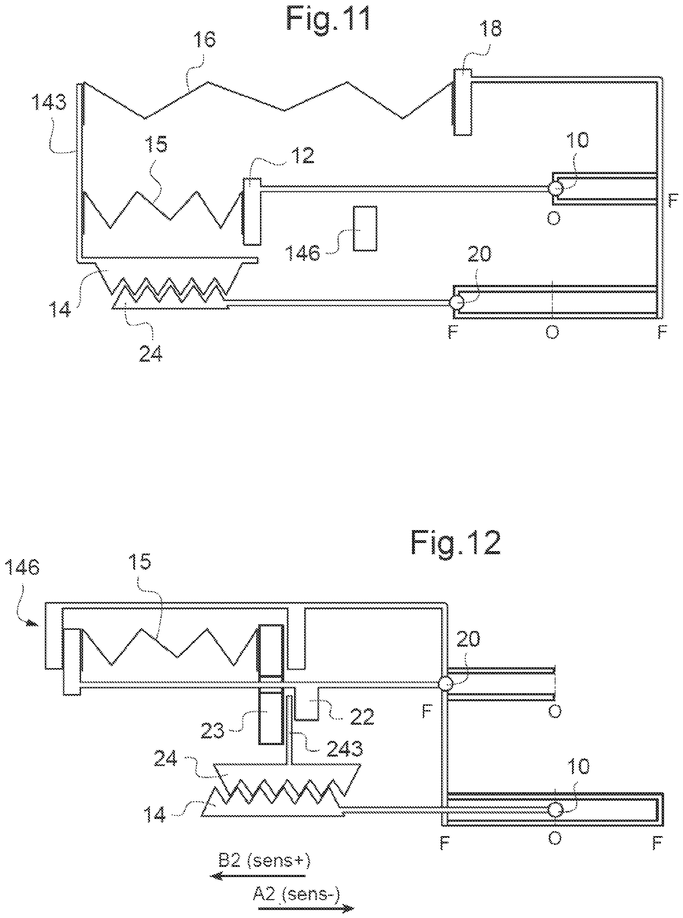

Parallèlement un second ressort de rappel 16 est positionné entre la première roue dentée 14 et une butée fixe de ressort 18 (visible sur la figure 11) positionnée, elle aussi, sur le corps 1 du doseur double, pour forcer le retour de la première roue dentée 14 vers une position de repos où le premier volet 10 est plein ouvert. Comme déjà dit, selon l'invention, cette position pleine ouverte au repos permet d'assurer la sécurité du moteur du véhicule en envoyant, dans le cas d'une panne, du fluide d'admission refroidi dans les cylindres, en particulier si cette panne du moteur d'actionnement 9 correspond à un cas d'utilisation sévère du moteur du véhicule.

De même le dispositif de commande de la seconde voie 4, représentée sous la forme de la voie non refroidie, comporte un second volet 20, mobile en rotation autour de son axe 21, dont l'extrémité inférieure a vocation à tourner dans le support d'axe 8 du corps 1 du doseur double. L'extrémité supérieure, quant à elle, est porteuse de la seconde roue dentée 24, à laquelle elle est fixée rigidement de sorte qu'une rotation de cette seconde roue dentée déclenche une rotation de même ampleur du volet 20. Une rotation du moteur d'actionnement 9, d'une ampleur telle que la seconde roue dentée 24 effectue, sous l'action de la roue dentée intermédiaire 32, un demi-tour entraîne l'ouverture puis la refermeture du second volet 20, avec un retournement du volet et un changement de sa face qui est opposée au fluide d'admission en position plein fermée. Des butées fixes (non représentées), positionnées sur le corps du doseur, peuvent être ajoutées pour limiter la rotation de la seconde roue dentée au delà des positions plein fermées et éviter que le second volet ne dépasse ces positions et n'occasionne alors des fuites sur la seconde voie alors que l'on souhaite l'obturer. Le dispositif de commande de la seconde voie est complété par un dispositif 23 de mesure de la position angulaire de la seconde roue dentée et du second volet 20. Un tel dispositif est classiquement constitué par un aimant associé à une sonde magnétique, du type sonde à effet Hall. L'information qu'il mesure est transmise au calculateur ECU 103 qui la prend en compte dans la consigne qu'il donne au moteur d'actionnement 9.

En se référant maintenant à la figure 11 on voit, sous une autre représentation, la cinématique mise en place pour réaliser les diagrammes des figures 4 et 5 du premier mode de réalisation. Cette figure décrit la position des éléments, dans la position de repos, c'est-à-dire à l'extrémité gauche de la branche A1. La position des divers éléments sur la branche A1 correspond à un dosage dit proportionnel du fluide d'admission ; tous les points de cette branche A1 correspondent en effet à un dosage dans des proportions variables du fluide passant dans les deux voies. Sur cette figure la position des volets est indiqué par un "O" pour ouvert et un "F" pour fermé.

Lors du passage de la position de repos à la position du point de rencontre des deux branches A1 et B1, par suite d'une rotation du moteur d'actionnement de 0° à α, le doigt 143 de la première roue dentée 14 tourne d'un angle α, ce qui laisse la première platine 12 tourner du même angle sous l'action du premier ressort 15, et par conséquent, qui laisse se fermer progressivement le premier volet 10. Le premier ressort 15 ne se comprime pas et reste dans une position de précontrainte. Parallèlement la seconde roue dentée 24, qui est couplée à la première roue dentée 14, tourne du même angle α et ouvre le second volet 20. Le second ressort 16 se comprime progressivement en emmagasinant de l'énergie pour pouvoir ramener les deux roues dentées et les deux volets vers la position de repos. A la fin de la branche A1 le premier volet 10 est complètement fermé et le second volet 20 complètement ouvert. Comme indiqué précédemment la cinématique des deux volets est, a priori, conçue de façon à maintenir un débit constant pour l'ensemble des deux voies 3 et 4 pour tous les points de la branche A1.

La branche B1, au cours de laquelle la position du moteur d'actionnement 9 passe de α à 2α, correspond à une fermeture progressive du second volet 20 de la seconde voie 4, celui de la première voie restant fermé. Elle correspond à un dosage du fluide d'admission sur la seule seconde voie 4, par la rotation de la seconde roue dentée 24, la première voie 3 restant obturée par le premier volet 10. La première roue dentée 14 tourne elle aussi, mais la première platine 12 ne tourne plus, du fait qu'elle reste bloquée contre la butée fixe de première voie 146. Le premier ressort 15 est comprimé sur cette branche, du fait de la rotation de la première roue dentée 14 alors que la première platine 12 ne tourne pas. Le second ressort 16 continue sa compression, du fait qu'une de ses extrémités est associée à la rotation des deux roues dentées vis-à-vis du corps 1 et que l'autre est immobilisée par la butée fixe de ressort 18. L'énergie emmagasinée par ces deux ressorts permettra le retour des deux volets vers la position de repos lorsque le moteur d'actionnement 9 sera ramené à sa position neutre ou bien en cas de panne par perte de la commande des volets. En outre, la fermeture de la seconde voie 4 par le second volet 20 s'effectue par une rotation de ce second volet d'un angle 2α, proche de 180°, ce qui signifie que le second volet a effectué un retournement sur lui-même depuis sa position de repos jusqu'à sa position en fin de la branche B1.

Il convient de remarquer que la cinématique d'un doseur double dans ce premier mode de réalisation de l'invention, permet par la rotation progressive, dans un seul sens, d'un moteur d'actionnement unique, de doser simultanément le fluide d'admission sur les deux voies (branche A1), en choisissant la répartition entre les deux voies, ou de le doser sur une seule voie (branche B1). Le doseur double permet, sur la branche B1, de doser le fluide d'admission envoyé aux cylindres, à une température constante, ici la température du fluide non-refroidie. Dans le doseur selon ce premier mode de réalisation, le moteur électrique génère un couple de rotation qui n'agit que dans un seul sens pour atteindre la position désirée. La phase de retour vers sa position initiale s'effectue sans autre couple que celui qui permet de vaincre les résistances de frottement. Les divers éléments de la cinématique reviennent, quant à eux, en place sous l'action des ressorts de rappel 15 et 16.

En se référant maintenant à la figure 12 on voit la cinématique mise en place pour réaliser les diagrammes des figures 6 et 7 du second mode de réalisation. Cette figure 12 décrit la position des éléments, dans la position de repos, c'est-à-dire au point de rencontre des deux branches A2 et B2. La position des divers éléments sur la branche A2 correspond à celle du dosage dit proportionnel du fluide d'admission, c'est à dire à la délivrance d'un débit total constant.

Lors du passage de la position de repos à la position extrême de la branche A2, par suite d'une rotation du moteur d'actionnement 9 de 0° à -α, le doigt 243 de la seconde roue dentée 24 tourne d'un angle -α, ce qui entraîne l'ouverture progressive du second volet 20. Parallèlement la première roue dentée 14, qui est couplée à la seconde roue dentée 24, tourne du même angle -α et le premier volet 10 se ferme. Le ressort 15 se comprime progressivement en emmagasinant de l'énergie pour permettre le retour des deux roues dentées et des deux volets vers leur position de repos. A la fin de la branche A2 le premier volet 10 est complètement fermé et le second volet 20 complètement ouvert.

La branche B2, au cours de laquelle le moteur d'actionnement passe de 0° à +α, correspond à une fermeture progressive du premier volet 10, le second volet 20 restant fermé. Elle correspond à un dosage du fluide d'admission sur la seule première voie 3, par la rotation de la première roue dentée 14, la seconde voie 4 restant obturée par le second volet 20. La seconde roue dentée 24 tourne, entraînant la première roue dentée 14, le premier volet 10 et la platine 23 du premier volet mais la platine 22 de la seconde voie ne tourne pas, du fait qu'elle reste bloquée contre une butée fixe de seconde voie 146. Le premier ressort 15 est comprimé sur cette branche, du fait de la rotation de la seconde roue dentée 24 alors que la platine correspondante 22 ne tourne pas. Le ressort 15 se comprime et l'énergie emmagasinée permettra le retour des deux volets vers la position de repos lorsque le moteur d'actionnement 9 sera ramené à sa position neutre ou bien en cas de panne par perte de la commande des volets. On remarque, là encore, que la fermeture de la première voie 3 résulte d'une rotation du premier volet 10 ayant une amplitude de 2α, proche de 180°, ce qui signifie que ce premier volet a effectué un retournement sur lui-même entre les positions extrêmes de deux branches A2 et B2.

La figure 13 montre un volet 10 et son dispositif de commande, pour un doseur double dans les deuxième et troisième versions de l'invention, destinés à une voie non refroidie 4 pour la seconde version et destinés à une voie refroidie 3 pour la troisième version. Le volet 10 est monté sur son axe 11, dont l'extrémité inférieure a vocation à tourner dans le support d'axe 7 du doseur. Le volet est ainsi mobile en rotation par rapport au corps 1. L'extrémité supérieure, quant à elle, est porteuse d'une première platine supérieure 12 à laquelle elle est fixée rigidement de sorte qu'une rotation de cette platine supérieure déclenche une rotation de même ampleur du volet 10. Sur l'axe 11 est également montée une platine inférieure 13 qui est libre en rotation autour de l'axe et qui, de ce fait, n'est pas entraînée en cas de rotation de la platine supérieure 12. Enfin l'axe 11 porte une roue dentée 14, libre en rotation autour dudit axe, cette dernière permettant l'entraînement de l'une, de l'autre ou des deux platines, selon un principe qui sera explicité plus loin. La roue dentée 14 est entraînée, dans un sens ou dans l'autre, par un pignon monté sur l'arbre de sortie du moteur électrique commandé par l'ECU 103. C'est cette roue dentée qui est l'organe d'actionnement des deux platines et, in fine, de positionnement du volet 10.

Entre les deux premières platines supérieure 12 et inférieure 13 est positionné un premier ressort de rappel en rotation 15 qui tend à faire tourner les deux platines dans des sens inversés. Pour cela chaque platine comporte une encoche, référencée respectivement 121 et 131, qui forme un logement dans lequel vient s'encastrer l'extrémité correspondante du ressort de rappel 15, et qui transmet à la platine correspondante la force exercée par le ressort.

Les platines supérieure 12 et inférieure 13 vont maintenant être décrites en relation avec les figures 13 à 15. Alors que la platine supérieure 12 présente une fente 122, du type mortaise, dans laquelle vient s'insérer un tenon porté par l'axe 11 pour la solidariser avec cet axe, la platine inférieure 13 comporte un palier tubulaire 132 dans lequel l'axe 11 peut tourner librement. On assure ainsi à la fois la solidarisation de la platine supérieure 12 avec l'axe et la libre rotation de la platine inférieure 13 par rapport à cet axe. Chacune de ces deux platines comporte en outre deux excroissances s'étendant radialement, de façon à former à la fois une butée courte supérieure 123, respectivement une butée courte inférieure 133, et une butée longue supérieure 124, respectivement une butée longue inférieure 134, qui ont pour objet de constituer des limites à la rotation de ces platines vis-à-vis des pièces environnantes. Les butées longues 124 et 134 ont pour objet de limiter la rotation par rapport au corps du doseur double 1, en coopérant avec des butées fixes positionnées sur ce corps, alors que les butées courtes servent de support pour l'entraînement des platines et/ou la compression du ressort 15 par la roue dentée 14. La position angulaire de ces butées, tant courtes que longues, est définie de façon à adapter la position du volet au cas de fonctionnement considéré pour le moteur.

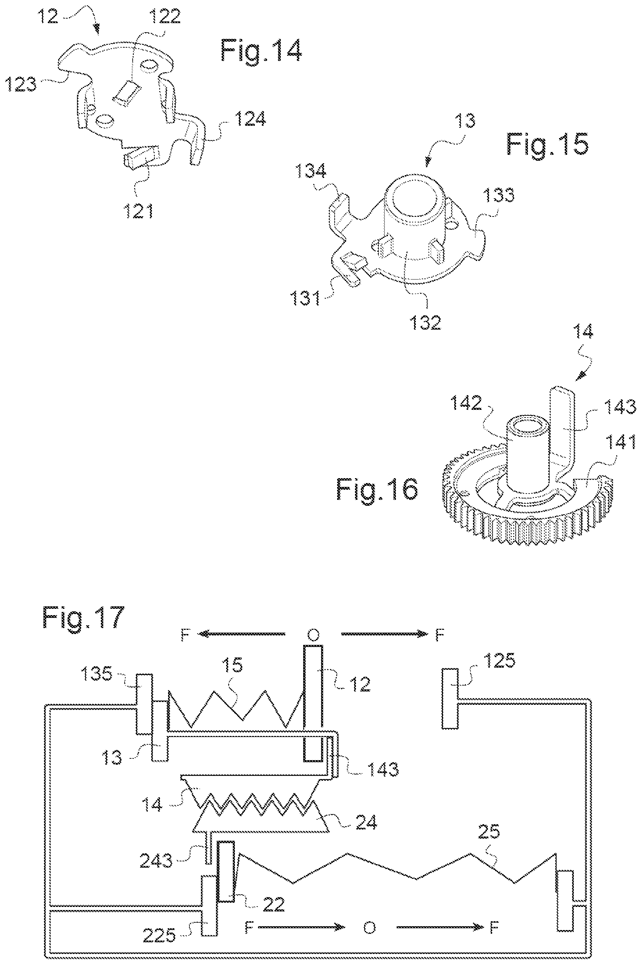

En référence à la figure 16, la roue dentée 14 a la forme d'un disque présentant des dents sur la majeure partie de la circonférence de sa face externe 141, de façon à pouvoir être entraînée en rotation par le pignon du moteur d'actionnement du doseur double 1. En son centre elle comporte un tube cylindrique 142, s'étendant axialement, qui forme un palier pour l'axe 11 du volet de dosage du débit passant par la voie considérée. Enfin à sa périphérie, la roue dentée comporte un doigt d'entraînement 143 qui s'étend axialement et qui a pour fonction de coopérer avec les butées courtes supérieure 123 et inférieure 133 des deux platines 12 et 13 de la première voie. Sa distance radiale à l'axe 11 est donc sensiblement égale à celle des butées courtes des deux platines de façon à assurer leur entraînement. En revanche elle est inférieure à celle des butées longues pour pouvoir passer devant elles au niveau de la section angulaire correspondante et ainsi laisser la rotation de la roue dentée se poursuivre sans interférer avec les butées fixes qui sont destinées aux butées longues des platines.

La deuxième voie, correspondant à la voie non refroidie 4, comporte un dispositif de commande analogue à celui décrit pour la première voie 3 et illustré sur la figure 13, à ceci prêt qu'il ne comporte qu'une platine supérieure, dite seconde platine supérieure 22, et pas de platine inférieure. Le doigt 243 de la seconde roue dentée 24, analogue au doigt 143 de la première roue denté 14, ne coopère alors qu'avec une butée courte supérieure, de la seconde platine supérieure 22, qui est analogue à celle 123 de la première voie. Dans cette configuration le ressort de rappel 25 de la seconde voie est porté à ses extrémités, d'une part, par une encoche positionnée sur la seconde platine supérieure et, d'autre part, par une butée fixe qui, elle, est positionnée sur le corps du doseur double.

Dans la description faite de ce troisième mode de réalisation le pignon du moteur d'actionnement engrène directement sur une des deux roues dentées, la seconde engrenant sur la première et tournant donc dans un sens opposé. Ce mode pourrait tout aussi bien être réalisé avec un pignon qui engrène sur les deux roues dentées, qui tourneraient alors dans le même sens, la cinématique d'entraînement du second volet étant adaptée en conséquence. De même, il est, bien évident que la première voie peut être choisie comme étant la voie non refroidie, qui comporterait alors deux platines, la seconde voie étant alors la voie refroidie, qui ne comporterait alors qu'une seule platine.

En se référant maintenant à la figure 17, on voit, sous une autre représentation, la cinématique mise en place pour réaliser les diagrammes des figures 8 et 9 du troisième mode de réalisation. Cette cinématique est représentée ici, dans la position de repos, c'est-à-dire celle que prennent les platines supérieure 12 et inférieure 13 de la première voie 3, ainsi que la platine supérieure 22 de la seconde voie 4, dans le cas d'une absence ou perte de l'entraînement par le moteur d'actionnement. Cette position correspond également au point de rencontre des branches A3 et B3, qui est situé sur l'axe des ordonnées. Sur la figure, les platines 12, 13 et 22 sont illustrées par des rectangles et l'état des volets correspondant au positionnement des platines est indiqué par un "O" pour ouvert et un "F" pour fermé. Là encore, dans cette position de repos, le volet 10 de la première voie 3 est ouvert, alors que le volet de la seconde voie 4 est fermé.

La position des divers éléments sur les branches A3 ou C3 correspondent à un dosage dans des proportions variables du fluide passant dans une des deux voies alors que la branche B3 correspond à un dosage proportionnel du fluide d'admission. La figure 17 montre également, par des flèches, les mouvements que ces éléments sont susceptibles d'effectuer en réponse à une mise en mouvement par le moteur d'actionnement 9.

La branche A3, où le moteur d'actionnement passe de 0° à -α, consiste en une fermeture progressive du volet 10 de la première voie 3 à partir de sa position de repos qui correspond à une position pleine ouverte. Le doigt 143 de la première roue dentée 14 entraîne la platine supérieure 12 de la première voie en comprimant le premier ressort 15. La platine inférieure 13 est maintenue en place par la butée fixe inférieure 135 du corps du doseur qui la bloque en rotation et permet la compression du premier ressort 15. La seconde voie n'est pas affectée pendant cette branche A3, le second ressort 25 étant dans sa position de précontrainte et la seconde platine supérieure 22 étant dans sa position de repos, appuyée contre la seconde butée fixe 225 sous l'action dudit second ressort 25.

Sur la branche B3, où le moteur d'actionnement passe de 0° à α et qui correspond à un dosage proportionnel du fluide d'admission, le doigt 143 de la première roue dentée 14 vient pousser la platine inférieure 13 et fermer progressivement le premier volet 10. Il ne comprime pas le premier ressort 15 qui reste dans une position de précontrainte, tant que la première platine supérieure 12 ne vient pas au contact de la butée fixe supérieure 125, et entraîne la première platine supérieure 12. Parallèlement le second doigt 243 ouvre progressivement la seconde voie 4 en poussant la seconde platine supérieure 22 et subséquemment le second volet 20. Le second ressort 25 se comprime progressivement, à la différence du premier ressort qui reste en précontrainte tout au long de la branche B3. A la fin de la branche B3 le premier volet 10 est complètement fermé et le second volet 20 complètement ouvert.

Enfin, sur la branche C3, où le moteur d'actionnement passe de α à 2α et qui correspond à un dosage sur la seule seconde voie 4, la seconde platine supérieure 22 se déplace sous l'action du second ressort 25. Le doigt 243 de la seconde roue dentée 24 entraîne la butée courte 223 de la seconde platine supérieure et subséquemment le volet de la seconde voie qui se ferme progressivement. Parallèlement la première platine supérieure 12 reste en appui contre la première butée fixe 125 et la compression du premier ressort 15 augmente, du fait que la première platine inférieure 13 est entraînée en rotation par le premier doigt 143. alors que la première platine supérieure 12 est en butée. Les compressions des deux ressorts 15, 25 s'ajoutent.

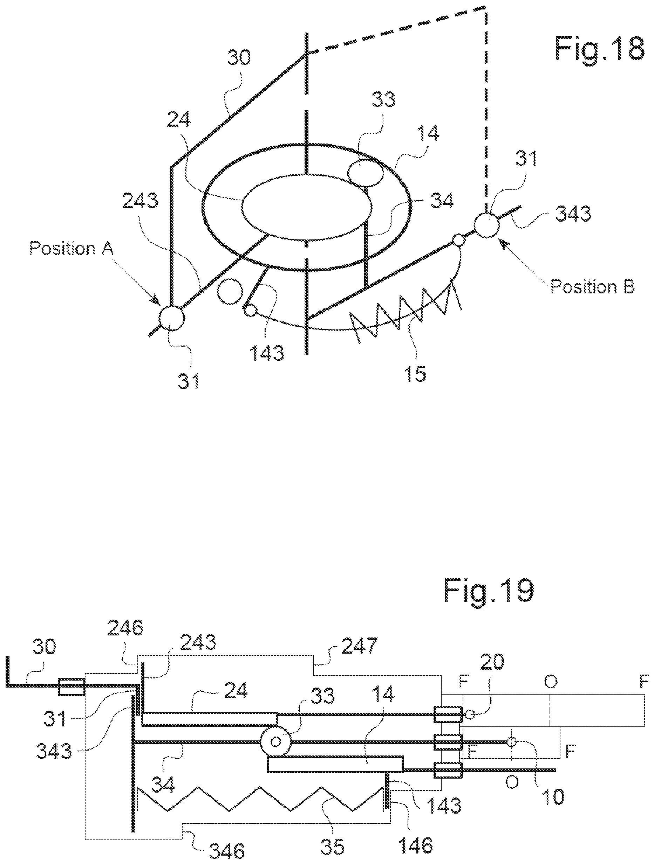

En se référant maintenant aux figures 18 et 19 on va décrire une variante du troisième mode de réalisation, qui se caractérise par la présence d'un seul ressort et celle d'un train épicycloïdal constitué à partir des deux roues dentées. Dans ce mode le moteur d'actionnement n'entraîne pas directement les roues dentées mais il agit par l'intermédiaire d'un actionneur 30 qui, soit met en rotation un pignon satellite qui engrène sur les roues dentées, soit met en rotation, dans le sens inverse du précédent, la roue dentée d'une des deux voies. Par ailleurs les volets sont entraînés, pour la première voie par l'arbre porte-satellite, et pour la seconde voie, directement par la roue dentée sur laquelle l'actionneur agit directement. Les éléments de cette variante du troisième mode qui ont la même fonction que dans la première variante portent le même numéro de référence et ne sont pas décrits à nouveau.

La figure 18 est une vue schématique en perspective du dispositif alors que la figure 19 est une vue dépliée sur un plan, de ce même dispositif. Sur cette figure 19 le dispositif est décrit dans la position de repos, c'est-à-dire celle où le volet 10 de la première voie est ouvert et celui de la seconde voie est fermé. Le positionnement est alors analogue à celui de la figure 11 dans la première variante, c'est à dire à la transition entre les branches A3 et B3.

La première roue dentée 14 fonctionne comme la couronne extérieure d'un train épicycloïdal alors que la seconde roue dentée 24 fonctionne comme le planétaire de ce train. Un satellite 33, lié en rotation à un porte-satellite 34, est logé entre ces deux roues dentées et assure leur entraînement combiné. Un entraîneur 30, actionné par le moteur d'actionnement (non représenté), est mobile en rotation autour de l'axe du train épicycloïdal et possède un ergot 31 d'entraînement, en premier lieu du doigt 243 de la seconde roue dentée et, en second lieu d'un troisième doigt 343 porté par le porte-satellite 34. Il est représenté sur la figure 18, en trait plein et en pointillés, dans les deux positions A et B où il embraye respectivement sur le doigt 243 de la seconde roue dentée et sur celui 343 du porte-satellite. Un ressort de rappel 35 tend à repousser le doigt 343 du porte-satellite 34 du doigt 143 de la première roue dentée et à ramener le porte-satellite vers sa position dite de repos.

Enfin le corps 1 du doseur double comporte un certain nombre de butées fixes, qui seront détaillées plus loin, contre lesquelles viennent s'appuyer les doigts des roues dentées et celle du porte-satellite pour faire fonctionner le train épicycloïdal, et laisser tourner deux de ses éléments alors que le troisième est à l'arrêt.

Dans la position -α, correspondant à la position extrême de la branche A3 et la position fermée des deux volets, l'actionneur 30 est dans une position plein rétractée, qui est associée à une position plein fermée du volet 10 de la première voie 3. Parallèlement la seconde roue dentée 24 est dans une position où le volet de la seconde voie 4 est également fermé ; cette position est définie par la mise sur une première butée fixe 246 de la seconde voie, qui est formée sur le corps du doseur double 1. Tout au long de la branche A3, le doigt 243 de la seconde roue dentée 24 reste au contact de cette première butée fixe de la seconde voie 246 et le second volet 20 reste par conséquent fermé. Le volet 10 de la première voie suit, en revanche, le mouvement du porte-satellite 34 et se ferme progressivement au long de cette branche A3 en passant de la position 0° à -α, assurant ainsi le dosage sur la seule première voie 3. Quant à la première roue dentée 14, positionnée comme couronne du train épicycloïdal, elle est entraînée en rotation par celle 33 du porte-satellite 34 puisque le planétaire 24 est bloqué par la première butée fixe 246 de la seconde voie. Elle ne rencontre pas de butée tout au long de la branche A3. Le ressort 35 subit par contre une première compression, du fait que le porte-satellite 34 tourne moins vite que ne le fait la couronne 14 du train épicycloïdal ; cette compression assure la possibilité de retour du porte-satellite 34 vers la position de repos lorsque l'entraîneur 30 est relâché ou est repoussé vers la position 0°.

Dans la position de repos, correspondant à une rotation à 0° de l'actionneur et qui est illustrée sur la figure 19, le second doigt 243 est, comme déjà dit, encore en butée contre sa première butée fixe 246 alors que l'ergot 31 de l'actionneur 30 est au contact de ce second doigt 243. Le troisième doigt 343 est également au contact de l'ergot 31, étant rappelé vers cette position sous l'action du ressort de rappel 35. La position de l'actionneur 30 correspond à une position du porte-satellite 34 dans laquelle le volet 10 de la première voie 3 est ouvert. La seconde voie 4 est encore en position fermée et le doigt 143 de la première roue dentée est en butée contre sa butée fixe 146.

Tout au long de la branche B3, c'est à dire lors d'une rotation du moteur d'actionnement de 0° à α, le doigt 143 de la première roue dentée reste en butée contre sa butée fixe 146. L'extension de l'actionneur 30 pousse la seconde roue dentée 24, ouvrant ainsi la seconde voie ; parallèlement, sous l'action de la seconde roue dentée qui agit comme planétaire, le porte-satellite 34 est entraîné en rotation ce qui assure la fermeture du volet 10 de la première voie. On obtient ainsi le dosage proportionnel recherché et la constance du débit du fluide d'admission sur l'ensemble des deux voies. En fin de banche B3, l'actionneur 30 s'est déplacé suffisamment pour que le porte-satellite 34, sous l'action du ressort de rappel 35, vienne sur une butée fixe de porte-satellite 346, qui correspond à une position plein fermée de la première voie 3. La seconde roue dentée 24 est dans une position intermédiaire entre sa première butée de seconde voie 246 et une deuxième butée de seconde voie 247 explicitée plus loin, qui correspond à la position plein ouverte du second volet 20

La branche C3 correspond à une extension encore plus importante de l'actionneur 30, du fait d'une rotation du moteur d'actionnement de α à 2 α. Le porte-satellite 34 reste bloqué par sa butée fixe 346 et le train épicycloïdal génère une rotation simultanée des deux roues dentées. L'actionneur 30 repousse complètement la seconde roue dentée 24 par son ergot 31 et ferme progressivement le volet de la seconde voie 4, alors que la première voie 3 reste fermée, assurant ainsi le dosage du fluide d'admission sur la seule seconde voie. Cette progression continue jusqu'à ce que le second doigt 243 rencontre la seconde butée de seconde voie 247, qui est formée dans le corps du doseur double 1. La position de cette seconde butée correspondant à la position plein fermée du second volet 20, évitant ainsi que celui-ci dépasse cette position de pleine fermeture. Quant à la première roue dentée 14 elle est mise en rotation par le train épicycloïdal et comprime le ressort de rappel 35 pour permettre le retour de la seconde roue dentée 24 sur la branche C3, quand l'actionneur 30 est rétracté de nouveau.

Au final cette deuxième variante reproduit le même schéma d'ouverture et de fermeture des volets des deux voies 3 et 4, que la première variante, tel qu'il est illustré sur les figures 8 et 9.

Dans tous les modes de réalisation décrits, l'invention se caractérise par une cinématique qui place, dans la position de repos, le volet 10 de la première voie 3 en position plein ouverte et le volet 20 de la seconde voie 4 en position plein fermée.

La position que prend chacun des deux volets dans la position au repos permet d'assurer la sécurité du moteur du véhicule en envoyant, dans le cas d'une panne, du fluide d'admission refroidi dans les cylindres (première voie ouverte) et seulement du fluide refroidi (seconde voie fermée). Une telle position des volets garantit une mise en sécurité du moteur du véhicule par le doseur double, même si cette panne du moteur d'actionnement 9 intervient lors d'un cas d'utilisation sévère de ce moteur du véhicule.

On pourra encore noter que le doseur a été présenté plus haut comme situé en amont du refroidisseur et présentant une entrée et deux sorties. En variante, il pourra bien sûr être situé en aval. Il présentera alors deux entrées et une sortie, cette dernière étant en communication avec les pipes d'admission du moteur.

Le dispositif selon l'invention peut comprendre au moins un capteur de position configuré pour mesurer les angles d'ouverture des volets. En particulier, le capteur peut être configuré pour mesurer la position du volet de la voie soumise à un dosage du fluide d'admission. Par exemple, dans le premier mode de réalisation, un capteur de position peut être configuré pour mesurer la position du second volet 20 de la seconde voie 4. Dans le second mode de réalisation, un capteur de position peut être configuré pour mesurer la position du premier volet 10 sur la première voie 3. Dans le troisième mode de réalisation, un capteur de position peut être configuré pour mesurer les positions des premier 10 et second 20 volets sur les premiere 3 et seconde 4 voies.

## Revendications

1. Dispositif d'alimentation en fluide d'admission pour moteur à combustion interne ledit dispositif comprenant :
- un doseur, muni d'un corps (1) de doseur dans lequel sont agencées une première (3) et une seconde (4) voies de circulation dudit fluide d'admission, dans lesquelles sont positionnés des premier (10) et second (20) volets d'obturation mobiles pour doser le débit traversant lesdites voies de circulation, ledit doseur comportant en outre un moteur d'actionnement (9) desdits volets et une cinématique apte à actionner le premier volet et/ou le second volet en réponse à une rotation dudit moteur,
- un refroidisseur relié à l'une des voies de circulation du doseur, dite voie refroidie,
ledit dispositif étant configuré pour relier l'autre voie de circulation du doseur, dite voie chaude, au moteur thermique sans passer par le refroidisseur, **caractérisé en ce que** la cinématique est conformée pour assurer, en cas de perte de l'actionnement des volets par le moteur d'actionnement (9), une mise en situation de repos desdits volets, le volet (10) de la voie froide (3) étant alors en position plein ouvert et le volet (20) de la voie chaude (4) étant alors en position plein fermée.

2. Dispositif selon la revendication 1 dans lequel la cinématique est conformée pour assurer, à partir de ladite position de repos et en réponse à une rotation dans un premier sens dudit moteur d'entraînement (9), une fermeture de la voie froide (3) simultanément à une ouverture de la voie chaude (4), réalisant ainsi un dosage dit proportionnel.

3. Dispositif selon la revendication 2 dans lequel la cinématique est conformée pour assurer, en réponse à une poursuite de la rotation dans le premier sens dudit moteur d'entraînement (9), la fermeture de la voie chaude (4), tout en maintenant la voie froide (3) fermée, réalisant ainsi un dosage du fluide d'admission à la température de la voie chaude.

4. Dispositif selon l'une des revendications 2 ou 3 dans lequel la cinématique est conformée pour assurer, à partir de ladite position de repos et en réponse à une rotation dans un second sens, opposé au premier sens, dudit moteur d'entraînement (9), une fermeture de la voie froide (3) tout en maintenant la voie chaude (4) fermée, réalisant ainsi un dosage du fluide d'admission à la température de la voie froide.

5. Dispositif selon l'une des revendications 2 à 4 dans lequel la cinématique est conformée pour assurer un débit total constant lors dudit dosage proportionnel.

6. Dispositif selon l'une des revendications 1 à 5 dans lequel la cinématique est conformée de façon à amener au moins un des deux volets en position fermée selon deux positions, l'une correspondant à un retournement dudit volet par rapport à l'autre.

7. Dispositif selon l'une des revendications 1 à 6 dans lequel le moteur d'actionnement entraîne par l'intermédiaire d'un pignon d'entraînement deux roues dentées (14, 24) engrenant l'une sur l'autre, le pignon d'entraînement du moteur d'actionnement engrenant sur l'une d'entre elles, au moins une première roue dentée (14, 24) portant un doigt d'entraînement (143, 243) conformé pour entraîner en rotation une première platine (12, 22) liée rigidement à l'axe d'un desdits volets (10, 20), par l'intermédiaire d'un ressort de rappel (15),

8. Dispositif selon la revendication 7 dans lequel ladite première platine (12) comporte une plage morte (126) dans sa coopération avec le doigt d'entraînement correspondant (143), ladite plage morte correspondant à l'actionnement par le moteur d'actionnement (9) du volet (20) entraîné par la seconde roue dentée, le volet (10) associé à la première roue dentée restant immobile.

9. Dispositif selon l'une des revendications 1 à 6 dans lequel le moteur d'actionnement entraîne deux roues dentées (14, 24) formant planétaire et couronne pour un train épicycloïdal, la rotation des composants dudit train épicycloïdal étant assurée par un élément (30) actionné par le moteur d'actionnement et ledit élément agissant à l'encontre d'un ressort de rappel unique (35) porté par ledit doseur.

10. Module d'admission d'air pour moteur à combustion interne comportant un dispositif selon l'une des revendications ci-dessus.

## Patentansprüche

1. Vorrichtung zum Versorgen mit Ansaugfluid für Brennkraftmaschine, wobei die Vorrichtung Folgendes umfasst:
- einen Dosierer, der mit einem Dosiererkörper (1) versehen ist, in dem ein erster (3) und ein zweiter Zirkulationskanal (4) des Ansaugfluids eingerichtet sind, in welchen eine erste (10) und eine zweite (20) bewegliche Verschlussklappe positioniert sind, um den Durchsatz, der die Zirkulationskanäle durchquert, zu dosieren, wobei der Dosierer außerdem einen Betätigungsmotor (9) der Klappen und eine Kinematik, die angepasst ist, um die erste und/oder die zweite Klappe als Reaktion auf eine Drehung des Motors zu betätigen, umfasst,
- einen Kühler, der mit einem der Zirkulationskanäle des Dosierers, gekühlter Kanal genannt, verbunden ist,
wobei die Vorrichtung konfiguriert ist, um den anderen Zirkulationskanal des Dosierers, warmer Kanal genannt, mit der Brennkraftmaschine zu verbinden, ohne durch den Kühler zu laufen, **dadurch gekennzeichnet, dass** die Kinematik ausgestaltet ist, um bei Betätigungsverlust der Klappen durch den Betätigungsmotor (9) eine Einstellung auf Ruheposition der Klappen sicherzustellen, wobei die Klappe (10) des gekühlten Kanals (3) in vollständig offener Position ist und die Klappe (20) des warmen Kanals (4) in vollständig geschlossener Position ist.

2. Vorrichtung nach Anspruch 1, wobei die Kinematik ausgestaltet ist, um ausgehend von der Ruheposition und als Reaktion auf eine Drehung in eine erste Richtung des Antriebsmotors (9) ein Schließen des kalten Kanals (3) gleichzeitig mit einem Öffnen des warmen Kanals (4) sicherzustellen, was daher eine sogenannte proportionale Dosierung ausführt.

3. Vorrichtung nach Anspruch 2, wobei die Kinematik ausgestaltet ist, um als Reaktion auf ein Fortsetzen der Drehung in die erste Richtung des Antriebsmotors (9) das Schließen des warmen Kanals (4) sichergestellt wird, während der kalte Kanal (3) gleichzeitig geschlossen gehalten wird, was daher eine Dosierung des Ansaugfluids mit der Temperatur des warmen Kanals ausführt.

4. Vorrichtung nach einem der Ansprüche 2 oder 3, wobei die Kinematik ausgestaltet ist, um ausgehend von der Ruheposition und als Reaktion auf eine Drehung des Antriebsmotors (9) in eine zweite Richtung, die zu der ersten Richtung entgegengesetzt ist, ein Schließen des kalten Kanals (3) sicherzustellen, während der warme Kanal (4) geschlossen gehalten wird, was daher eine Dosierung des Ansaugfluids mit der Temperatur des kalten Kanals ausführt.

5. Vorrichtung nach einem der Ansprüche 2 bis 4, wobei die Kinematik ausgestaltet ist, um einen konstanten Gesamtdurchsatz bei der proportionalen Dosierung sicherzustellen.

6. Vorrichtung nach einem der Ansprüche 1 bis 5, wobei die Kinematik derart ausgestaltet ist, dass mindestens eine der zwei Klappen in geschlossener Position gemäß zwei Positionen gebracht wird, wobei eine einer Umkehrung der Klappe in Bezug zu der anderen entspricht.

7. Vorrichtung nach einem der Ansprüche 1 bis 6, wobei der Betätigungsmotor über ein Antriebsritzel zwei Zahnräder (14, 24), die ineinander eingreifen, antreibt, wobei das Antriebsritzel des Betätigungsmotors auf einem dieser eingreift, wobei mindestens ein erstes Zahnrad (14, 24) einen Antriebsfinger (143, 243) trägt, der ausgestaltet ist, um eine erste Platte (12, 22), die starr mit der Achse der Klappen (10, 20) über eine Rückholfeder (15) verbunden ist, in Drehung anzutreiben.

8. Vorrichtung nach Anspruch 7, wobei die erste Platte (12) einen Totbereich (126) in ihrem Zusammenwirken mit dem entsprechenden Antriebsfinger (143) umfasst, wobei der Totbereich der Betätigung durch den Betätigungsmotor (9) der Klappe (20), die von dem zweiten Zahnrad angetrieben wird, entspricht, wobei die Klappe (10), die mit dem ersten Zahnrad verbunden ist, stillsteht.

9. Vorrichtung nach einem der Ansprüche 1 bis 6, wobei der Betätigungsmotor zwei Zahnräder (14, 24), die Planetenrad und Kranz für ein Planetengetriebe bilden, antreibt, wobei die Drehung der Bauteile des Planetengetriebes von einem Element (30), das von den Betätigungsmotor betätigt wird, sichergestellt wird, und wobei das Element gegen eine einzige Rückholfeder (35), die von dem Dosierer getragen wird, wirkt.

10. Luftansaugmodul für Brennkraftmaschine, das eine Vorrichtung nach einem der vorhergehenden Ansprüche umfasst.

## Claims

1. Device for feeding intake fluid for an internal combustion engine, said device comprising:
- a throttle, equipped with a throttle body (1) in which a first channel (3) and a second channel (4) for circulating said intake fluid are arranged, in which first (10) and second (20) movable sealing flaps are positioned for controlling the flow passing through said circulation channels, said throttle further comprising a motor (9) for actuating said flaps and a kinematic able to actuate the first flap and/or the second flap in response to a rotation of said motor,
- a cooler connected to one of the circulation channels of the throttle, referred to as the cooled channel,
said device being configured to connect the other circulation channel of the throttle, referred to as the hot channel, to the heat engine without passing through the cooler, **characterized in that** the kinematic is designed to ensure, in the case of loss of actuation of the flaps by the actuator motor (9), that said flaps are switched to a rest state, the flap (10) of the cold channel (3) then being in a fully open position and the flap (20) of the hot channel (4) then being in a fully closed position.

2. Device according to Claim 1, wherein the kinematic is designed to ensure that, starting from said rest position and in response to a rotation in a first direction of said drive motor (9), the cold channel (3) is closed simultaneously with an opening of the hot channel (4), thus providing 'proportional' controlling.

3. Device according to Claim 2, wherein the kinematic is designed to ensure that, in response to a continuation of the rotation in the first direction of said drive motor (9), the hot channel (4) is closed whilst the cold channel (3) is kept closed, thus providing a controlling of the intake fluid at the temperature of the hot channel.

4. Device according to either of claims 2 and 3, wherein the kinematic is designed to ensure that, starting from said rest position and in response to a rotation in a second direction, opposite the first direction, of said drive motor (9), the cold channel (3) is closed whilst the hot channel (4) remains closed, thus providing a controlling of the intake fluid at the temperature of the cold channel.

5. Device according to one of Claims 2 to 4, wherein the kinematic is designed to ensure a constant total flow during said proportional controling.

6. Device according to one of Claims 1 to 5, wherein the kinematic is designed so as to bring at least one of the two flaps into a closed position in accordance with two positions - one corresponding to a reversal of said flap with respect to the other.

7. Device according to one of Claims 1 to 6, wherein the actuator motor, by means of a drive pinion, drives two gearwheels (14, 24) meshing with one another, the drive pinion of the actuator motor meshing with one of said gearwheels, at least one first gearwheel (14, 24) carrying a drive finger (143, 243) designed to drive in rotation a first plate (12, 22) connected fixedly to the spindle of one of said flaps (10, 20), by means of a return spring (15).

8. Device according to Claim 7, wherein said first plate (12) comprises a dead range (126) in its cooperation with the corresponding drive finger (143), said dead range corresponding to the actuation by the actuator motor (9) of the flap (20) driven by the second gearwheel, the flap (10) associated with the first gearwheel remaining stationary.

9. Device according to one of Claims 1 to 6, wherein the actuator motor drives two gearwheels (14, 24) forming a sun gear and an annular gear for an epicyclic gear train, the rotation of the components of said epicyclic gear train being ensured by an element (30) actuated by the actuator motor and said element acting against a single return spring (35) carried by said throttle.

10. Air intake module for an internal combustion engine, comprising a device according to one of the preceding claims.
